Europäisches Patentamt

European Patent Office

Office européen des brevets

(19)

(11) **EP 0 949 221 B1**

(12) **EUROPEAN PATENT SPECIFICATION**

(45) Date of publication and mention
of the grant of the patent:
**09.06.2004 Bulletin 2004/24**

(51) Int Cl.7: **C05D 9/00**

(21) Application number: **99201036.3**

(22) Date of filing: **06.04.1999**

(54) **Composition suitable as liquid fertilizer containing sulphur as potassium tetrathionate**

Zusammensetzung geeignet als flüssiges Düngemittel enthaltend Schwefel als Kaliumtetrathionat

Composition utilisable comme engrais liquide contenant du soufre sous forme de tetrathionate de potassium

(84) Designated Contracting States:
**BE DE DK ES FR GB IT NL SE**

(30) Priority: **06.04.1998 NL 1008820**

(43) Date of publication of application:
**13.10.1999 Bulletin 1999/41**

(73) Proprietor: **Holland Chemical International N.V.
1101 BP Amsterdam Zuid-Oost (NL)**

(72) Inventor: **Bolhuis, Hugo H.,
Distribuidora Quimica Holanda
1Km despues Mosquera, Santafe de Bogota (CO)**

(74) Representative: **Kupecz, A., Drs. c.s.
Octrooibureau Los en Stigter B.V.
Weteringschans 96
1017 XS Amsterdam (NL)**

(56) References cited:
DE-A- 19 641 247      GB-A- 769 361
GB-A- 2 241 498      US-A- 4 265 653
US-A- 5 492 553

• **CHEMICAL ABSTRACTS, vol. 130, Columbus, Ohio, US; abstract no. 251783, CHENG SHAOXIN: "high concentrative non flocculent humic acid liquid fertiliser" XP002108198 & CN 1 169 976 A**

## Description

The invention relates to a composition suitable as fertilizer, which composition comprises the elements nitrogen, phosphorus, potassium, calcium, magnesium and sulphur, the elements being present in high concentrations.

DE-A-19641247 discloses a method for using humin acids and their salts as ferment fixed in/on biologic films and as catalyst in the gas, water and solid purification.

GB-A-769 361 discloses a fertilizer prepared by adding a water-soluble dithionate, e.g. sodium dithionate to a fertilizer such as sulphate.

Sulphur is one of the many elements essential for plant growth. Sulphur, like nitrogen, phosphorus, potassium, calcium and magnesium, is a macro nutrient which must be available in relatively large amounts for good plant growth.

Over the past years interest in sulphur as plant nutrient has increased considerably, partly because reports of sulphur deficiency over the whole world are becoming more frequent.

The main reasons for the more frequent occurrence of sulphur deficiency are:

1. An increased use of virtually sulphur-free high analysis fertilizers.
2. Increased crop yields, increasing the withdrawal of plant nutrients such as sulphur, from the soil.
3. The reduction of fuels with a high sulphur content and greater emphasis on the control of air pollution, reducing this atmospheric source of plant nutrient sulphur.
4. A reduced use of sulphur as fungicide and insecticide.

There are numerous material available which may be used as sources of plant nutrient sulphur, the large majority being sulphuric acid salts, although elemental sulphur itself is, of course, the most concentrated sulphur carrier, in the sense that it can be used either as an additive to fertilizers, or be applied directly on its own.

Over the past decade, the need for clear liquid concentrated fertilizers has risen significantly, due to the increasing use of so-called fertigation systems for a wide variety of crops. Liquid fertilizers are defined as materials which contain one or more plant nutrients and are applied to the soil in liquid form.

Fertigation is the application of plant nutrients in irrigation water. Fertigation affords the possibility of adapting the nutrients to the requirements of the plant, which increases the efficiency of the fertilizer and which is translated into better quality, bigger production and uniformity of crop.

These facts, together with the mounting evidence that sulphur deficiencies themselves are becoming more widespread, have led to the realization of the need for developing the technology and optimizing the efficiency of introducing the plant nutrient sulphur into liquid fertilizers. The preferred soluble sulphur compounds most commonly used in liquid fertilizers are the sulphuric acid salts; although elemental sulphur is obviously the most concentrated and least expensive form of sulphur, it is insoluble in all liquid fertilizers.

Over the past few years, techniques have been developed for preparing stable suspensions of elemental sulphur in fluids, including clear solutions; such suspensions in clear liquid fertilizer formulations cannot applied successfully by regular liquid application equipment because of the possibility of blockage of the trickle of sprinkler systems.

Furthermore, fertigation will usually require fertilizer compositions with the correct ratio between the various plant nutrients, including sulphur. In that case the sulphur carrier must be physically and chemically compatible with the other components and must deliver its sulphur content to the soil in a form which is readily available to plants.

It is well-known that phosphorus and calcium cannot be mixed without limit, they form insoluble precipitants at too high a pH, moreover, calcium and sulphur in the form of sulphate cannot be mixed at any practical concentration without forming insoluble calcium sulphate.

In recent years thiosulphuric acid salts such as ammonium and potassium thiosulphates have become a useful source of sulphur for use in liquid fertilizers because of their solubility and compatibility with most cations, including calcium. However, certain precautions should be kept in mind when using thiosulphates. Liquid fertilizers comprising both calcium and phosphorus will require acidic solutions to prevent the formation of insoluble calcium phosphate, a condition at which thiosulphates will decompose and elemental sulphur will separate.

For that reason, present commercial concentrate liquid fertilizers cannot combine all the six major plant nutrients in one single concentrate. As a result, in fertigation systems usually two separate concentrated stock solutions have to be prepared to prevent the formation of insoluble precipitates, which can only be mixed in the final end solution as it is taken up by the plants. Such a system will require two sets of storage tanks, pumps and injection lines and that will still not exclude possible precipitations due to the fact that at the end of the drip-feed lines the solubility product is exceeded as a result of evaporation.

It is the object of the present invention to eliminate these disadvantages. This objective is achieved in accordance with the present invention by the measure in which the formulation comprises the sulphur in the form of potassium tetrathionate ($K_2S_4O_6$).

This provides a formulation of liquid fertilizer comprising all the six important plant nutrients nitrogen, phosphorus, potassium, calcium, magnesium and sulphur. The potassium tetrathionate combines all required physical and chemical properties, making it very suitable as the plant nutrient sulphur in liquid fertilizers.

The formulation according to the invention possesses outstanding compatibility, that is to say solubility, in combination with alkaline-earth metals as well as good stability under acidic conditions.

Like the oxyacids of sulphur, polythionic acids are diabasic strong acids comprised by the general formula $H_2S_nO_6$, in which n takes the successive values 2, 3, 4, 5 and 6, although recent work has shown that n can have values as high as 80 in various sulphur sols.

The polythionic acids are relatively stable in aqueous solutions being made by acidification of solutions of their salts. Normal salts of all acids wherein n = 3 - 6 are well characterized and stable, and various methods for their preparation are available.

Dithionic acid, $H_2S_2O_6$, although often associated with polythionic acids, is not really related to them. Normal salts of the acid are quite stable at room temperature and are also well characterized. They are usually prepared by oxidation of the corresponding metal sulphite or hydrogen sulphite of sulphur dioxide. For the remaining polythionic acids, in particular trithionic, tetrathionic, pentathionic and hexathionic acid, various methods of preparation are available for the salts, usually involving a specific reaction.

The stability of the polythionic acids in aqueous solutions increases with lower pH values and higher sulphur content, but in general tetrathionic acid is the most stable of the polythionates, followed by pentathionic, trithionic, and hexathionic acid.

Thus, for example, a liquid concentrated fertilizer composed of the six major plant nutrients N - P - K - Ca - Mg - and S, using a polythionic acid or salts thereof as the sulphur carrier, will remain stable and clear solutions at a wide pH range and for a prolonged period of time. Within this range the concentrated solution is preferably maintained at pH 6 or below, and particularly preferably at pH 1 to 3, to a certain extent also depending on the calcium and phosphorus content of the fertilizer concentrate. Acids such as sulphuric acid, nitric acid and phosphoric acid may be useful in this regard. Mention may also be made of urea-phosphate and hydrochloric acid as suitable acids for maintaining the pH value within the preferred range.

In the present invention potassium tetrathionate is used, tetrathionic acid or the salts thereof, being the most stable and easiest to manufacture of the polythionic acids.

According to another feature in accordance with the present invention the formulation comprises extra micro plant-nutrients, such as manganese, zinc, copper, iron, boron or molybdenum and a mixture thereof.

The invention also relates to a formulation wherein the formulation comprises the compositions according to any of claims 1 to 4, wherein the formulation is in the form of a solid, 100% water soluble concentrate.

If the formulation is in the form of a concentrate, a considerable saving in transport and storage costs can be realized.

It is also possible to distribute the dry concentrate as such, thus without prior dissolution in water, over the soil; the concentrate will then dissolve in situ, for example, when it rains or when the ground is being watered.

The invention is explained in more detail by reference to the following, non-limiting examples.

## EXAMPLE 1

A concentrated liquid fertilizer composition was prepared based on the following raw materials:

| | | |
|---|---|---|
| $H_3PO_4$ | (85%) | 44,0 g |
| $NH_4NO_3$ | (60%) | 73,8 g |
| KOH | (90%) | 20,4 g |
| $KNO_3$ | (98%) | 117,0 g |
| $Mg(NO_3)_2$ | (32%) | 110,0 g |
| $Ca(NO_3)_2$ | (50%) | 247,0 g |
| $K_2S_4O_6$ | (98%) | 17,8 g |
| Made up to 1 litre with water | | |

The ingredients were admixed together to yield a liquid fertilizer concentrate with the following composition in terms of plant nutrients:

| | |
|---|---|
| N-total | 58,80 g/l |
| N-$NH_4$ | 7,10 g/l |
| N-$NO_3$ | 51,70 g/l |

(continued)

| | |
|---|---|
| P | 11,72 g/l |
| K | 60,00 g/l |
| Ca | 30,00 g/l |
| Mg | 6,60 g/l |
| S | 7,50 g/l |

The concentrated solution which had a pH of 2.2, was filtered and subsequently stored for a period of 90 days at ambient temperature, after which it was observed that the solution has remained transparent with only a slight reduction in pH to 2.05.

Analysis of the freshly prepared liquid fertilizer compared to the same solution after 90 days of storage, using a paper chromatography method, showed that only a minor part of the tetrathionic acid was converted into tri and pentathionic acid, according to a generally well-known reaction:

$$2 \, S_4O_6 \, 2+ \mapsto S_3O_6{}^{2-} + S_5O_6{}^{2-} \, .$$

## EXAMPLE 2

The concentrated liquid fertilizer as described in Example 1 was diluted to a concentration of 3.33 ml per litre water, yielding a plant nutrient solution which was subsequently used in growth tests and marked as solution A.

The alkalinity of the dilution water, i.e. irrigation water, was 0.5 mMol $CaCO_3$ and the pH of the resulting end solution was 5.5. Two additional diluted control solutions were also prepared, with the same concentration of plant nutrients, however, from one of the solutions the sulphur was eliminated and marked as solution B, and the other contained sulphur in the form of sulphate, which was marked as solution C. The composition in terms of plant nutrients of each solution expressed in parts per million, is shown in Table 1.

Table 1

| Plant nutrient solutions Concentration plant nutrients (parts per million) | | | |
|---|---|---|---|
| Plant nutrient | Solution A | Solution B | Solution C |
| N-total | 196 | 196 | 196 |
| N-NH$_4$ | 25 | 23 | 33 |
| N-NO$_3$ | 171 | 173 | 163 |
| P | 39 | 39 | 39 |
| K | 200 | 200 | 200 |
| Ca | 100 | 100 | 100 |
| Mg | 22 | 22 | 22 |
| S | 25 | 0 | 25 |
| | (tetrathionate) | | (sulphate) |
| pH | 5,5 | 5,5 | 5,5 |
| Electro-conductivity | 1,6 mS/cm | 1,4 mS/cm | 1,7 mS/cm |

To all three diluted fertilizer solutions the following micronutrients were also added: Mn 0.54 ppm, Zn 0.23 ppm, Cu 0.05 ppm, Fe 0.50 ppm (All in the form of nitrates), B 0.3 ppm (as boric acid) and Mo 0.05 ppm (as ammonium molybdate).

Each solution was subsequently used in a growth test of a plant demanding a relatively much sulphur, watercress (Nasturtium officinale N.O. Cruciferae), the leaves of this plant contain a pungent sulpho-nitrogenous oil.

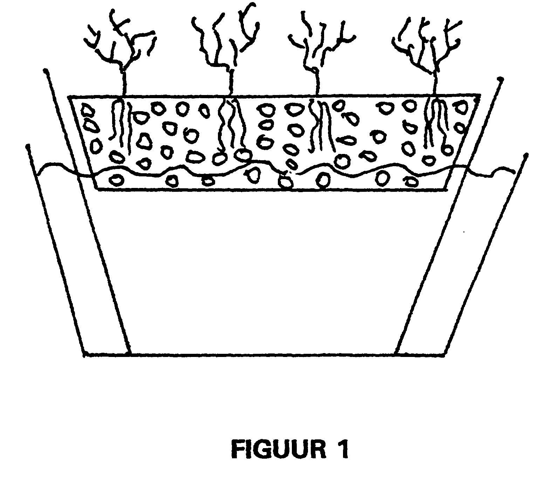

The seeds were germinated on an inert polyurethane foam agglomerate, which was allowed to absorb the nutrient solution (as shown in Fig. 1).

The growth tests were carried out using solutions A, B and C; solution A had been made up from a freshly prepared concentrate as well as from a concentrate which had been stored for 90 days (marked as solution A1 and A2, respectively).

Approximately 45 days after germination of the seeds, the cultivated plant material was harvested and analyzed for the following plant nutrients: N, P, K, Ca, Mg and S as well as the additional micronutrients.

The results of the analysis are shown in Table 2.

The results clearly show the effectiveness of the tetrathionate anion to be assimilated by the plant roots and to be converted into sulphate in the plant.

TABLE 2

| Solution | Elements (%) | | | | | | | | | | | |
|---|---|---|---|---|---|---|---|---|---|---|---|---|
| | N | P | K | Ca | Mg | S* | Mn | Zn | Cu | Fe | B | Mo |
| A 1 | 4,6 | 0,80 | 5,20 | 2,20 | 0,25 | 0,48 | 0,0158 | 0,0040 | 0,0012 | 0,0130 | 0,0037 | 0,0004 |
| A 2 | 4,7 | 0,72 | 5,40 | 2,00 | 0,28 | 0,44 | 0,0178 | 0,0032 | 0,0016 | 0,0150 | 0,0046 | 0,0006 |
| B | 4,6 | 0,77 | 5,50 | 2,00 | 0,24 | 0,0032 | 0,0136 | 0,0052 | 0,0010 | 0,0180 | 0,0032 | 0,0006 |
| C | 4,8 | 0,74 | 5,20 | 2,30 | 0,22 | 0,44 | 0,0166 | 0,0044 | 0,0018 | 0,0155 | 0,0050 | 0,0006 |

Foliar analysis of watercress grown in nutrient solutions as shown in Table 1

\* analyzed as $SO_4^{2-}$

## EXAMPLE 3

A fertilizer concentrate, as described in Example 1, was prepared with a 5 times higher sulphur content, to establish a possible toxicity limit. The concentrate was based on the following raw materials:

| | | |
|---|---|---|
| $H_3PO_4$ | (85%) | 44,0 g |
| $NH_4NO_3$ | (60%) | 105,4 g |
| KOH | (90%) | 20,4 g |
| $KNO_3$ | (98%) | 67,2 g |
| $Mg(NO_3)_2$ | (32%) | 110,0 g |
| $Ca(NO_3)_2$ | (50%) | 247,0 g |
| $K_2S_4O_6$ | (98%) | 89,0 g |
| Made up to 1 litre with water. | | |

The ingredients were admixed together in the same manner as described in Example 1 and subsequently diluted to a concentration of 3.33 ml per litre of water, yielding a diluted plant nutrient solution with a pH of 5.4 (solution A). An additional diluted solution of the same composition, but containing sulphur in the form of sulphate, was also prepared (solution B), see Table 3.

TABLE 3

| Plant nutrient solutions Concentration (parts per million) | | |
|---|---|---|
| Plant nutrient | Solution A | Solution B |
| N-total | 196 | 196 |
| N-$NH_4$ | 36 | 48 |
| N-$NO_3$ | 160 | 148 |
| P | 39 | 39 |
| K | 200 | 200 |
| Ca | 100 | 100 |
| Mg | 22 | 22 |
| S | 125 | 125 |
| | (tetrathionate) | (sulphate) |
| pH | 5,4 | 5,4 |
| Electroconductivity | 2,2 mS/cm | 2,2 mS/cm |

Both solutions were used as nutrient solutions in the watercress growth test as described in Example 2, adding the same amounts of micronutrients. During the subsequent growth tests no phytotoxic phenomena were observed and plants from both solutions showed virtually identical growth.

The results of the analysis of the harvested plant material are shown in Table 4.

The results also demonstrate that the assimilation of the plant roots is very similar for sulphate and tetrathionate.

TABLE 4

| Solution | Elements (%) | | | | | | | | | | | |
|---|---|---|---|---|---|---|---|---|---|---|---|---|
| | N | P | K | Ca | Mg | S[*] | Mn | Zn | Cu | Fe | B | Mo |
| A | 4,3 | 0,72 | 5,60 | 2,40 | 0,20 | 0,93 | 0,0125 | 0,0065 | 0,0018 | 0,0205 | 0,0062 | 0,0010 |
| B | 4,6 | 0,74 | 5,10 | 2,20 | 0,24 | 1,02 | 0,0160 | 0,0042 | 0,0010 | 0,0180 | 0,0050 | 0,0006 |

Foliar analysis of watercress grown in solutions as shown in Table 3

[*] analyzed as $SO_4^{2-}$

## EXAMPLE 4

A concentrated dry, in water 100% soluble fertilizer was prepared, using the following raw materials:

| | | |
|---|---|---|
| $CH_4N_2O \cdot H_3PO_4$ | (98%) | 8,64% |
| $NH_4NO_3$ | (97%) | 11,95% |
| $KNO_3$ | (98%) | 30,16% |
| $Mg(NO_3)_2 \cdot 6H_2O$ | (99%) | 20,47% |
| $Ca(NO_3)_2 \cdot 4H_2O$ | (99%) | 26,15% |
| $K_2S_4O_6$ | (98%) | 2,63% |
| | | $\overline{\overline{100,00\%}}$ |

The dry ingredients, all 100% water soluble, were admixed together to produce a dry fertilizer concentrate of the following composition in terms of plant nutrients:

| | |
|---|---|
| N-total | 13,25% |
| N-$NH_4$ | 1,24% |
| N-organic | 1,55% |
| N-$NO_3$ | 10,46% |
| K | 12,15% |
| Ca | 4,40% |
| Mg | 1,90% |
| S | 1,10% |

The dry formulation was stored for a period of 60 days at ambient temperature, after which it was dissolved in water (alkalinity 0.5 mMol) at a concentration of 200 g/l to simulate the preparation of a concentrated fertilizer stock solution.

The thus prepared transparent stock solution was stored for another 60 days and during that period remained completely stable, without signs of precipitation.

## Claims

1. A composition suitable as fertiliser, comprising elements of nitrogen, phosphorus, potassium, calcium, magnesium and sulphur, the elements being present in high concentrations, **characterized in that** the sulphur is present in the form of a potassium tetrathionate.

2. A composition according to claim 1, **characterized in that** potassium tetrathionate is specifically combined with a soluble calcium salt also being present in high concentration.

3. A composition according to one of the preceding claims, **characterized in that** the soluble calcium salt is present in the form of calcium nitrate.

4. A composition according to one of the preceding claims, **characterized in that** the composition comprises extra micro plant-nutrients, such as manganese, zinc, copper, iron, boron or molybdenum and a mixture thereof.

5. A composition according to one of the preceding claims, **characterized in that** the composition is a concentrated solution.

6. A composition according to claim 5, **characterized in that** the solution has a pH of 1-3.

7. A composition according to claim 6, **characterized in that** the pH is adjusted with the aid of a chemical such as phosphoric acid, nitric acid, sulphuric acid, hydrochloric acid or urea-phosphate.

8. A formulation in the form of a solid, 100% water soluble concentrate **characterized in that** it comprises the compositions according to any of claims 1 to 4.

# EP 0 949 221 B1

**Patentansprüche**

1. Als Düngemittel geeignete Zusammensetzung, umfassend die Elemente Stickstoff, Phosphor, Kalium, Calcium, Magnesium und Schwefel, bei der die Elemente in hohen Konzentrationen vorliegen, **dadurch gekennzeichnet, dass** der Schwefel in Form von Kaliumtetrathionat vorliegt.

2. Zusammensetzung nach Anspruch 1, **dadurch gekennzeichnet, dass** das Kaliumtetrathionat spezifisch mit einem löslichen Calciumsalz kombiniert wird, das auch in hohen Konzentrationen vorliegt.

3. Zusammensetzung nach einem der vorangehenden Ansprüche, **dadurch gekennzeichnet, dass** das lösliche Calciumsalz in Form von Calciumnitrat vorliegt.

4. Zusammensetzung nach einem der vorangehenden Ansprüche, **dadurch gekennzeichnet, dass** die Zusammensetzung zusätzlich Pflanzen-Spurennährstoffe enthält wie Mangan, Zink, Kupfer, Eisen, Bor oder Molybdän und eine Mischung davon.

5. Zusammensetzung nach einem der vorangehenden Ansprüche, **dadurch gekennzeichnet, dass** die Zusammensetzung eine konzentrierte Lösung ist.

6. Zusammensetzung nach Anspruch 5, **dadurch gekennzeichnet, dass** die Lösung einen pH-Wert von 1-3 aufweist.

7. Zusammensetzung nach Anspruch 6, **dadurch gekennzeichnet, dass** der pH-Wert mit Hilfe eines chemischen Stoffes wie Phosphorsäure, Salpetersäure, Schwefelsäure, Salzsäure oder Harnstoff-Phosphat eingestellt wird.

8. Formulierung in Form eines festen, zu 100 % wasserlöslichen Konzentrats, **dadurch gekennzeichnet, dass** sie die Zusammensetzungen nach einem der Ansprüche 1-4 enthält.


**Revendications**

1. Composition utilisable comme engrais comprenant des éléments d'azote, de phosphore, de potassium, de calcium, de magnésium et de soufre, les éléments étant présents en haute concentration, **caractérisée en ce que** le soufre est présent sous la forme d'un tétrathionate de potassium.

2. Composition selon la revendication 1, **caractérisée en ce que** le tétrathionate de potassium est spécifiquement mélangé avec un sel de calcium soluble qui est aussi présent en haute concentration.

3. Composition selon l'une des revendications précédentes, **caractérisée en ce que** le sel de calcium soluble est présent sous la forme de nitrate de calcium.

4. Composition selon l'une des revendications précédentes, **caractérisée en ce que** la composition comprend en plus des micro-éléments nutritifs pour plantes tels que du manganèse, du zinc, du cuivre, du fer, du bore ou molybdène et un mélange de ceux-ci.

5. Composition selon l'une des revendications précédentes, **caractérisée en ce que** la composition est une solution concentrée.

6. Composition selon la revendication 5, **caractérisée en ce que** la solution a un pH de 1-3.

7. Composition selon la revendication 6, **caractérisée en ce que** le pH est réglé à l'aide d'un produit chimique tel que de l'acide phosphorique, de l'acide nitrique, de l'acide sulfurique, de l'acide chlorhydrique ou un phosphate d'urée.

8. Formulation sous la forme d'un concentré solide soluble à 100% dans l'eau, **caractérisé en ce qu'**il comprend les compositions selon l'une quelconque des revendications 1 à 4.

**FIGUUR 1**